Europäisches Patentamt

(19) European Patent Office

Office européen des brevets

(11) Publication number: **0 372 995**
**A2**

(12) **EUROPEAN PATENT APPLICATION**

(21) Application number: **89312834.8**

(22) Date of filing: **08.12.89**

(51) Int. Cl.⁵: **C08L 67/02, //(C08L67/02, 23:06,53:00)**

(30) Priority: **09.12.88 US 281750**

(43) Date of publication of application:
**13.06.90 Bulletin 90/24**

(84) Designated Contracting States:
**AT BE CH DE ES FR GB GR IT LI LU NL SE**

(71) Applicant: **HOECHST CELANESE CORPORATION**
**Route 202-206 North**
**Somerville, New Jersey(US)**

(72) Inventor: **Yu, Thomas C.**
**54 Susan Drive**
**Chatham New Jersey(US)**

(74) Representative: **De Minvielle-Devaux, Ian Benedict Peter et al**
**CARPMAELS & RANSFORD 43, Bloomsbury Square**
**London WC1A 2RA(GB)**

(54) **Impact modified injection moldable polyethylene terephthalate resin.**

(57) Injection moldable resin compositions include polyethylene terephthalate, linear low density polyethylene as a nucleating agent, and a maleic anhydride functionalized block copolymer having aromatic endblocks and olefinic midblocks. Preferably, the impact modifying agent is a maleic anhydride functionalized triblock copolymer having styrene endblocks and poly(ethylene/butylene) midblocks or at least one selected from the group consisting of maleated styrene-butadiene block copolymers, maleated ethylene-propylene block copolymers, maleated ethylene-propylene diene modified block copolymers, and hydrogenated polybutadiene.

# IMPACT MODIFIED INJECTION MOLDABLE POLYETHYLENE TEREPHTHALATE RESIN

## FIELD OF THE INVENTION

This invention relates generally to thermoplastic molding compositions and, more particularly, to thermoplastic injection moldable, impact modified polyethylene terephthalate molding compositions. In a particular form, the invention is embodied in a composition which includes polyethylene terephthalate resin, an olefinic nucleating agent in the form of linear low density polyethylene, and a maleic anhydride functionalized block copolymer as an impact modifying agent.

## BACKGROUND AND SUMMARY OF THE INVENTION

The use of nucleating agents in resin compositions of polyethylene terephthalate resin to improve the resin crystallization rate is well known. Such nucleated polyethylene terephthalate compositions have achieved widespread acceptance as injection molding materials useful to form a variety of end use products, for example ovenable containers. However, those in this art have still endeavored to improve the impact resistance of nucleated polyethylene terephthalate while, at the same time, attempting to retain its injection molding capability.

In this regard, it has been proposed in U.S. Patent No. 3,405,198 to Rein et al to incorporate polyolefins, particularly high pressure high density polyethylene, into thermoplastic polyesters so as to enhance or improve certain properties (e.g., impact strength) of injection molded parts formed of the compositions therein disclosed. More recently, it has been suggested that linear low density polyethylene (LLDPE) may be incorporated into thermoplastic polyester compositions so as to improve the impact strength of the composition while yet retaining the capability of the composition to be injection molded.

For example, U.S. Patent 4,476,274 to Liu suggests that the impact strength of thermoplastic polyester compositions may be improved when low amounts (i.e., from about 3% to about 20% by weight) of a linear low density polyethylene and fibrous glass are incorporated into the polyester resin compositions. Similarly, it has also been suggested in U.S. Patent 4,564,658 to Liu that injection moldable grades of thermoplastic polyester compositions particularly poly(1,4-butylene terephthalate), may be formed by incorporating linear low density polyethylene thereinto. According to Liu '658, a "core-shell" type of impact modifier (i.e., an acrylic or methacrylic grafted polymer of conjugated diene or an acrylate elastomer, alone or copolymerized with a vinyl aromatic compound) is preferably blended into the polyester/LLDPE composition.

It has now been found that injection moldable polyethylene terephthalate compositions having improved physical properties in terms of, for example, its impact strength, are obtained by blending linear low density polyethylene as a nucleating agent with an effective impact-modifying amount of a maleic anhydride graft elastomer. Preferably, the impact modifying agent which may be employed in the compositions of this invention is selected from maleic anhydride functionalized triblock copolymers having styrene endblocks and poly(ethylene/butylene) midblocks or at least one copolymer selected from maleated styrene-butadiene block copolymers, maleated ethylene-propylene block copolymers, and maleated ethylene-propylene diene modified block copolymers.

The resin compositions of this invention will find use in a variety of products where injection moldability and impact resistance are desirable.

## DETAILED DESCRIPTION OF THE INVENTION

Any suitable thermoplastic polyethylene terephthalate produced by any of the well known processes may be employed as the base resin for the compositions of this invention. Preferably, the polyethylene terephthalate base resin is comprised of linear chains and will be formed by the polymerization of a suitable glycol (e.g., ethylene glycol) and a free acid (e.g., terphthalic acid) and will contain at least 85 mol percent polyethylene terephthalate, and preferably at least 90 mol percent polyethylene terephthalate. Thus, the preferred base resin will contain substantially all polyethylene terephthalate.

Copolyesters may also be employed, however. These copolyesters will typically be formed by adding minor amounts of one or more ester-forming ingredients other than ethylene glycol and terephthalic acid or its derivatives, and then polymerizing the ingredients. Exemplary ester-forming ingredients which may be copolymerized with the polyethylene terephthalate units include glycols such as diethylene glycol, trimethylene glycol, tetramethylene glycol, hexamethylene glycol, 1,4 cyclohexane-dimethanol and the like, and dicarboxylic acids such as hexahydroterephthalic acid, bibenzoic acid, adipic acid, sebacic acid azelaic acid, and the like. Thus, for example, the polyester resin which may be employed in the practice of this invention may contain 85 to 100 mol percent of polyethylene terephthalate structural units and 0 to 15 mol percent copolymerized ester units other than polyethylene terephthalate.

The polyethylene terephthalate base resin will preferably have an intrinsic viscosity (I.V.) as determined in phenol/o-dichlorobenzene (1:1 parts by weight) at 25°C of about 0.45 dl/g to about 1.0 dl/g, preferably between 0.6 dl/g to 0.95 dl/g and will commonly exhibit a glass transition temperature of about 75° to 80°C and a melting point of about 250° to 265°C.

One particularly preferred polyethylene terephthalate which can be employed in the compositions of this invention is commercially available from Eastman Chemical under the product designation Kodapak™ 9921, which has an intrinsic viscosity of 0.80, a number average molecular weight of about 26,000, and a weight average molecular weight of 52,000. A small amount of diethylene glycol is believed to be present in this preferred polyethylene terephthalate resin as a second comonomer to reduce crystallization rate.

The linear low density polyethylene resin which may satisfactorily be employed in the compositions of this invention includes any of the well known linear low density polyethylene resins commercially available from a number of sources. The preferred linear low density polyethylene are actually copolymers of ethylene and a minor amount (i.e., less than 20 mole percent) of an alpha olefin, such as propylene, butene-1, pentene-1, 4 methyl pentene-1, hexene-1 and octene-1, and will have a density of between about 0.89 to about 0.96 gram/cc, preferably between about 0.915 and 0.945 gram/cc. One particularly preferred linear low density polyethylene which can be employed in the compositions of this invention is commercially available from Dow Chemical Co. under the product designation XU 61508-13.

Alternatively, the linear low density polyethylene may be produced by the polymerization processes described in, for example, U.S. patent Nos. 4,354,009, 4,128,607 and 4,076,698, in addition to published European Application No. 4645, each of these publications being expressly incorporated hereinto by reference.

In general, the copolymerization of linear low density polyethylene can take place in either a gas phase fluidized bed reactor or liquid phase solution process reactor, preferably the former, at pressures ranging from normal to 5000 psi, preferably less than 1000 psi and at temperatures of from 20°C to 310°C, preferably 30°C to 115°C in the presence of suitable high activity catalysts. Typical catalyst systems comprise transition metal complex catalyst preferably composed of at least one compound of a transition element of groups IVa, Va, and VIa having a halide and/or hydrocarbon group attached to said transition metal and a reducing component such as a metal halide or a compound having metal attached directly to carbon, e.g., metal alkyl. Highly satisfactory catalyst systems have a halide of titanium and wherein the effective organo metallic components are metal alkyl compounds having aluminum as the metal, especially LiAl(hydrocarbon)₄. Such systems include, for example, TiCl₄ and LiAl(alkyl)₄, VOCl₃ and Li(alkyl), MoCl₃ and Al(alkyl)₃, TiCl₄ and Nd alkylMgBr, and the like. Catalyst systems such as these as well as other useful catalysts systems are disclosed in U.S. Patent Nos. 4,354,009, 4,128,607, and 4,076,698 and European Application 4645. Such catalyst systems are used in a molar ratio of ethylene to catalyst in a range of 35,000 to 400,000 to one.

Likewise, the maleic anhydride functionalized elastomer impact modifying agents which may successfully be employed in the compositions of this invention are commercially available. For example, particular modifying agents which can be used in this invention include the Kraton® G resins available from Shell Chemical Company, with Kraton® FG 1901X resin being particularly preferred. Generally, this preferred resin is a maleic anhydride functionalized triblock copolymer consisting of polystyrene endblocks and poly-(ethylene/butylene) midblocks, and will typically exhibit a specific gravity of about 0.91 gram/cc, a polymeric styrene content of about 28 weight percent, a functionality (as bound maleic anhydride) of about 2 weight percent, a Shore A hardness of about 75, and a solution viscosity at 25°C of 20 percent of the resin in toluene of about 6,000 cps. Maleic anhydride functionalized resins of this type are more full disclosed in U.S. Patent No. 4,578,429 to Gergen et al, the entire content of which is expressly incorporated hereinto by reference.

Another particularly preferred impact modifying agent for purposes of the present invention is a maleated hydrogenated polybutadiene resin of the type disclosed in U.S. Patent No. 4,508,874 to Hergenrother et al, the entire content of which is expressly incorporated hereinto by reference. Yet another impact modifier which may be successfully employed in the present invention is the maleated anhydride

3

adducts of styrene butadiene block copolymer obtained via an "ENE" type reaction as disclosed in Hergenrother et al '874.

The compositions of this invention can be prepared by any convenient blending technique well known to those in the art. For example, the components may be compounded by melt blending the various constituents, and then extruding the melt-blended composition in any expedient form, e.g., pellets.

Preferably, the linear low density polyethylene will be present in the final compositions according to the present invention in an amount of less than about 5 weight percent, usually less than about 3 weight percent, based on the total weight of the composition. The impact modifying agents, i.e., the maleic anhydride functionalized elastomer component, is preferably incorporated into the compositions of this invention in an amount of between 10 to 30 percent by weight (depending upon the impact resistance that is desired), and will typically be present in an amount of about 20 percent by weight, based on the total weight of the composition.

A variety of other ingredients which are typically included in injection moldable polyethylene terephthalate resin may optionally be included in the compositions of this invention. These optional ingredients may, for example, include reinforcing media (such as inorganic particles and/or fibers, such as glass and/or organic media such as Kevlar® chopped fibers or pulp), fillers (such as mineral fillers of mica, quartz, talc, or the like), pigmenting agents, and the like. Parafinic oils and polypropylenes may be employed to modify the modulus of the maleic anhydride functionalized elastomers used in the compositions of this invention, particularly Kraton® FG 1901X resin. In addition, a variety of property-enhancing agents, such as thermal stabilizers, coupling agents, flow promoters, and the like may be included in the compositions of this invention.

A further understanding of this invention will be obtained from the following nonlimiting Examples, which show particularly preferred compositions according to this invention.

## EXAMPLES

The following samples were prepared by the following procedure. Before compounding, the polyethylene terephthalate component was dried for a minimum of four hours at 149°C in a dehumidifying oven or, alternately at 120°C for four hours under vacuum. The components were tumbled together briefly, and then compounded in a 28 mm ZSK twin screw extruder using temperature profiles of from 210°C to 280°C at the die and a screw speed of 210 to 220 revolutions per minute. Alternately, the polyethylene terephthalate and nucleant were precompounded together and the impact modifier was added during a second extrusion step.

Test specimens were molded on a one ounce Boy injection molding machine with barrel set temperatures ranging from 240°C to 275°C at the feed to 245°C to 290°C at the nozzle. The mold temperature was maintained between 50°C to 70°C.

All components are expressed in terms of weight percent based on the total weight of the composition.

|  | | Sample No. | | | |
|---|---|---|---|---|---|
| Component | S1 | CS1 | CS2 | CS3 | CS4 |
| PET(1) | 77 | 97 | 97 | 97 | 79 |
| Nucleating Agent: | | | | | |
| (a) LLDPE(2) | 3 | 3 | | | |
| (b) Surlyn® HP(3) | | | 3 | 3 | |
| (c) Sodium Carbonate or sodium bicarbonate | | | | | 1 |
| Impact Modifier: | | | | | |
| (a) Kraton® FG-1901X | 20 | | | 20 | 20 |
| TOTAL: | 100 | 100 | 100 | 100 | 100 |
| Notes: | | | | | |

(1) - Polyethylene terephthalate resin, Kodapak™ 9921
(2) - Dow Corporation linear low density polyethylene, XU 61508-13
(3) - DuPont
(4) - Shell Chemical Company

Samples S1 and CS1-CS3 were injection molded to form specimens which were subjected to tensile, elongation and notched Izod testing. The results appear in the Table below. CS4 could not be injection molded.

TABLE

|  | Sample No. | | | |
|---|---|---|---|---|
|  | SI | CSI | CS2 | CS3 |
| Tensile @Y,Psi | 5640 | 7300 | 7600 | 4600 |
| Elongation @Y,% | 375 | 370 | 370 | 56 . |
| Notched Izod - 1/8" @RT, Ft-lbs/in | NB | 3.8 | 4.8 | NB |
| Note: | | | | |
| NB - No Breakage | | | | |

The above data demonstrate the efficacy of the compositions of this invention in terms of their moldability and physical properties. Thus, Sample No. S1 according to this invention exhibited no breakage in the notched Izod test as compared to Sample No. CS1 (which only included LLDPE as a nucleating agent) and Sample No. CS2 (which only included Surlyn® HP resin, a known nucleating agent). Moreover, the fact that Sample No. CS4 was not injection moldable indicates the efficacy of LLDPE as a nucleating agent for polyethylene terephthalate.

The above data also demonstrate the surprising synergy when LLDPE and maleic anhydride functionalized graft elastomers are employed in polyethylene terephthalate blends as nucleating and impact modifying agents, respectively. That is, although Sample No. CS3 also shows no breakage when subjected to the notched Izod test, it exhibited significantly reduced tensile and elongation properties as compared to Sample No. S1 according to this invention.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.


**Claims**

1. An impact modified injection moldable resin composition comprising (a) polyethylene terephthalate resin, (b) an olefinic nucleant, and (c) an effective amount of an impact modifying agent sufficient to impart impact resistance to the resin composition, wherein said impact modifying agent is a maleic anhydride functionalized block copolymer having aromatic endblocks and olefin midblocks.

2. An impact modified injection moldable resin composition as in claim 1, wherein said olefinic nucleant is a linear low density polyethylene.

3. An impact modified injection moldable resin composition as in claim 2, wherein said impact modifying agent is a maleic anhydride functionalized triblock copolymer having styrene endblocks amd poly(ethylene/butylene) midblocks.

4. An impact modified injection moldable resin composition as in claim 2, wherein said impact modifying agent is at least one selected from the ground consisting of maleated styrene-butadiene block copolymers, maleated ethylene-propylene block copolymers, maleated ethylene-propylene diene modified block copolymers, and hydrogenated polybutadiene.

5. An impact modified injection moldable resin composition as in claim 4, wherein said linear low density polyethylene is present in an amount of less than about 5 percent by weight, and said impact modifying agent is present in an amount of between about 10 to 30 percent by weight.

6. An impact modified injection moldable resin composition as in claim 5, wherein said linear low density polyethylene is present in an amount of about 3 weight percent, and said impact modifying agent is present in an amount of about 20 weight percent.

7. Polyethylene terephthalate molding composition consisting essentially of a blend of polyethylene terephthalate resin, linear low density polyethylene as a nucleating agent, and an impact modifying agent which is at least one selected from the group consisting of maleated styrene-butadiene block copolymers, maleated ethylene-propylene block copolymers, maleated ethylene-propylene diene modified block copolymers, and hydrogenated polybutadiene.

8. Polyethylene terephthalate molding composition as consisting essentially of a blend of polyethylene terephthalate resin, linear low density polyethylene as a nucleating agent, and a maleic anhydride functionalized triblock copolymer consisting of polystyrene endblocks and poly(ethylene/butylene) midblocks as an impact modifying agent.

9. Polyethylene terephthalate molding composition as in claim 8, wherein said impact modifying agent has a specific gravity of about 0.91 g/cc, a polymeric styrene content of about 28% by weight, and a functionality as bound maleic anhydride of about 2% by weight, a shore A harness of about 75, and a solution viscosity at 25°C of about 6,000 cps as determined by a solution of 20% by weight of the impact modifying agent in toluene.

10. Polyethylene terephthalate molding composition as in claim 8, wherein said linear low density polyethylene has a density of between about 0.915 to about 0.945 grams/cc.

11. An injection moldable, impact modified resin composition consisting essentially of polyethylene terephthalate, linear low density polyethylene in an amount of about 3 weight percent based on the total weight of the composition, and an impact modifying agent in an amount of about 20 weight percent based on the total weight of the composition, said impact modifying agent being a maleic anhydride functionalized triblock copolymer consisting of polystyrene endblocks and poly(ethylene/butylene) midblocks, and wherein said resin composition exhibits no breakage when subjected to a notched Izod test.